# FASCICULE DE BREVET EUROPEEN

(11) **EP 2 089 245 B1**
(45) Date de publication et mention de la délivrance du brevet: **08.12.2010**
(21) Numéro de dépôt: 07858648.4
(22) Date de dépôt: 23.10.2007
(51) Int. Cl.: B60J 5/10, B60J 1/18, B60J 5/12

(54) **STRUCTURE DE HAYON DE VEHICULE AUTOMOBILE ET VEHICULE AUTOMOBILE COMPORTANT UNE TELLE STRUCTURE.**
HECKKLAPPENKONSTRUKTION FÜR EIN AUTOMOBIL UND AUTOMOBIL MIT DERARTIGER KONSTRUKTION
TAILGATE STRUCTURE FOR AN AUTOMOTIVE VEHICLE AND AUTOMOTIVE VEHICLE WITH SUCH STRUCTURE

(30) Priorité: 16.11.2006 FR 0654941
(43) Date de publication de la demande: 19.08.2009
(73) Titulaire: Peugeot Citroën Automobiles SA, 78140 Vélizy-Villacoublay (FR)
(72) Inventeur: GUINOIS, Pascal, 91680 Bruyeres Le Châtel (FR); PAPET, Gilles, 78370 Plaisir (FR)
(86) Numéro de dépôt international: PCT/FR2007/052229
(87) Numéro de publication internationale: WO 2008/059148

(56) Documents cités:
- EP-A2- 0 774 370
- EP-A2- 0 989 008
- EP-A2- 1 170 160
- FR-A1- 2 843 718
- US-A- 5 921 611

## Description

La présente invention concerne une structure de hayon de véhicule automobile et un véhicule automobile équipé d'une telle structure de hayon.

Certains véhicules automobiles sont munis à l'arrière d'un ouvrant appelé hayon, permettant de donner accès à un coffre de rangement ou à la partie arrière de l'habitacle du véhicule.

De façon générale, de tels hayons présentent au niveau de leur bord supérieur, des moyens d'articulation sur le pavillon du véhicule automobile, de sorte qu'ils peuvent être déplacés entre une position de fermeture et une position d'ouverture, par déplacement angulaire autour de ces moyens d'articulation. C'est le cas par exemple des véhicules automobiles du type monospace ou break.

Ces hayons sont généralement munis d'une vitre arrière aussi appelée lunette qui, dans certains cas, peut être déplaçable entre une position d'obturation et une position d'ouverture permettant d'avoir accès facilement à certaines zones du coffre, voir par exemple document EP-A-0774370.

La conception de la partie arrière des véhicules automobiles ainsi que les dimensions de la vitre arrière doivent répondre à certaines contraintes aussi bien au niveau de la réglementation qu'au niveau de l'implantation des mécanismes de déplacement de la vitre arrière.

La dimension verticale de la vitre arrière est imposée afin de permettre au conducteur d'avoir une bonne vision vers l'arrière du véhicule.

De plus, la hauteur du panneau du hayon situé au-dessous de la vitre, doit être au moins égale à la hauteur de la vitre avec en plus une place disponible à la partie inférieure de ce panneau suffisante pour permettre l'intégration des moyens de déplacement de la vitre entre les deux positons.

En effet, les moyens de déplacement de la vitre arrière utilisés jusqu'à présent, comportent des éléments de support de la vitre qui se fixent au-dessous de cette vitre ce qui impose de dimensionner le panneau du hayon suffisamment pour permettre la descente de la vitre à l'intérieur de ce panneau et des éléments de support de ladite vitre.

Or, dans certains véhicules automobiles, la place disponible dans le panneau du hayon ne permet pas une telle intégration.

Par ailleurs, la vitre arrière suit au cours de son déplacement entre les deux positions, une trajectoire inscrite dans un cylindre ce qui impose de prévoir l'implantation du moteur de l'essuie-vitre arrière, du troisième feu stop, de la plaque d'immatriculation et de son éclairage, et de la serrure du hayon en dehors de cette trajectoire augmentant ainsi l'épaisseur du panneau inférieur de ce hayon, au détriment du volume du coffre ou de la longueur du véhicule.

Enfin, au cours de son déplacement, la face externe de la vitre arrière frotte contre la raclette de l'essuie-vitre et contre un joint d'étanchéité extérieur monté sur le bord transversal supérieur du panneau du hayon pouvant entraîner les rayures sur le verre du fait des saletés déposées sur la vitre arrière et une usure rapide de la raclette essuie-vitre. En plus, la face externe de ladite vitre arrière frotte également contre un joint d'étanchéité intérieur pouvant entraîner une détérioration du réseau chauffant de dégivrage de la vitre arrière.

L'invention a pour but de proposer une structure de hayon de véhicule automobile qui permet, par des moyens simples et peu onéreux, de remédier à ces inconvénients.

L'invention a donc pour objet une structure de hayon de véhicule automobile, du type comportant, d'une part, une partie supérieure formée par deux montants latéraux, ménageant entre eux une ouverture dans laquelle est montée une vitre arrière déplaçable par coulissement par des moyens de guidage entre une position fermée d'obturation de l'ouverture et une position escamotée et, d'autre part, une partie inférieure formée par un panneau déterminant un logement de réception de la vitre arrière dans sa position escamotée, lesdits moyens de guidage de la vitre arrière comprenant :
- deux rails parallèles disposés chacun sur un bord latéral de la vitre arrière et s'étendant sensiblement sur la hauteur du hayon, et
- un ensemble d'organes de glissement monté sur chaque bord latéral de la vitre arrière et destiné à coopérer avec l'un desdits rails, **caractérisée en ce que** chaque rail comprend une portion courbe destinée à écarter, durant son déplacement, la vitre arrière d'un organe d'étanchéité porté par le panneau, la vitre arrière étant, en position escamotée ou de fermeture, apte à venir en appui sur l'organe d'étanchéité.

Selon d'autres caractéristiques de l'invention :
- chaque ensemble d'organes de glissement comprend deux patins, un patin supérieur disposé sensiblement au niveau du bord transversal supérieur de la vitre arrière et un patin inférieur disposé sensiblement au niveau d'un bord transversal inférieur de ladite vitre arrière,
- chaque rail comprend un rail supérieur cintré, destiné à coopérer avec le patin supérieur de la vitre arrière, le rail inférieur étant destiné à coopérer avec le patin inférieur de ladite vitre arrière,
- le rail supérieur forme le montant latéral correspondant, ledit rail étant solidaire du panneau,
- le rail inférieur comporte deux portions, une portion d'extrémité et une portion principale cintrée et reliée à la portion d'extrémité par une portion courbe, la portion d'extrémité étant décalée vers l'arrière du véhicule par rapport à la portion principale pour plaquer le bord transversal inférieur de la face externe de la vitre arrière contre un organe d'étanchéité porté par le bord transversal supérieur du panneau,
- l'organe d'étanchéité comprend une lèvre souple destinée à s'appuyer sur le bord transversal inférieur de la vitre arrière dans sa position fermée et un bourrelet disposé au-dessous de la lèvre et destiné à s'appliquer contre le rebord inférieur de cette vitre arrière dans ladite position.

L'invention a également pour objet un véhicule automobile, **caractérisé en ce qu**'il comporte une structure de hayon telle que précédemment définie.

D'autres caractéristiques et avantages de l'invention apparaîtront au cours de la description qui va suivre, donnée à titre d'exemple et faite en se référant aux dessins annexés, sur lesquels :
- la Fig. 1 est une vue schématique de la partie arrière d'un véhicule automobile équipée d'une structure de hayon, conforme à l'invention,
- les Figs. 2 et 3 sont des vues schématiques du hayon montrant la vitre arrière respectivement en position de fermeture et en position d'ouverture,
- les Figs. 4 à 6 sont des vues schématiques en coupe verticale du hayon et montrant les moyens de guidage du déplacement de la vitre arrière, et
- la Fig. 7 est une vue partielle en coupe transversale du hayon et montrant les moyens de guidage de la vitre arrière.

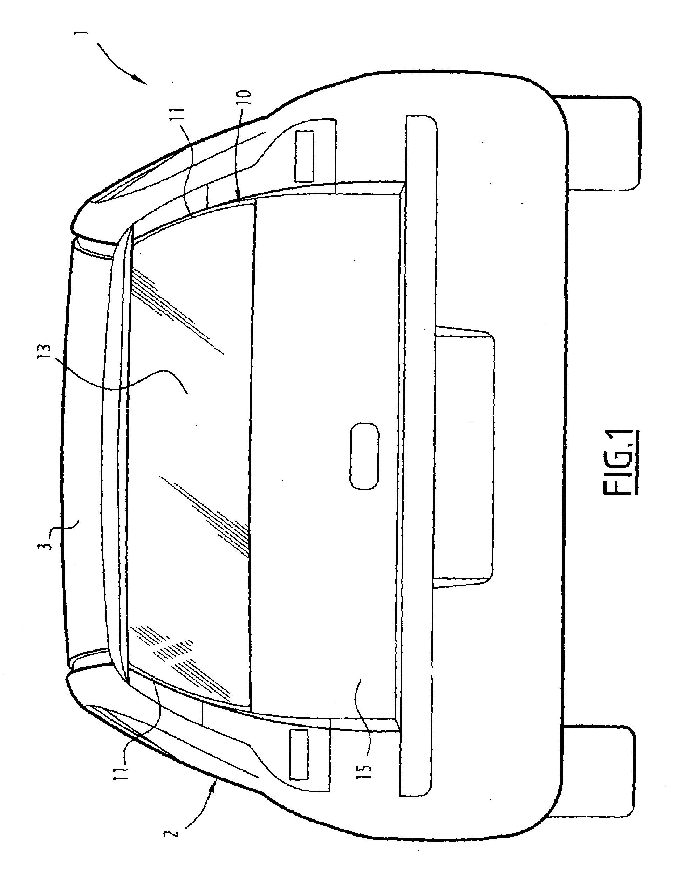

Sur la Fig. 1, on a représenté schématiquement un véhicule automobile désigné, de manière générale, par la référence 1 qui comporte, de manière classique, une carrosserie 2 délimitée, à sa partie supérieure par un pavillon 3 et à sa partie postérieure, par une structure de hayon désignée dans son ensemble par la référence 10.

La structure de hayon 10 présente, dans sa partie supérieure, des moyens, non représentés, d'articulation sur le pavillon 3 de la carrosserie 2 de sorte que cette structure peut être déplacée entre une position de fermeture de la partie postérieure de l'habitacle du véhicule et une position d'ouverture par déplacement angulaire autour de ces moyens d'articulation, donnant accès à la partie arrière dudit habitacle.

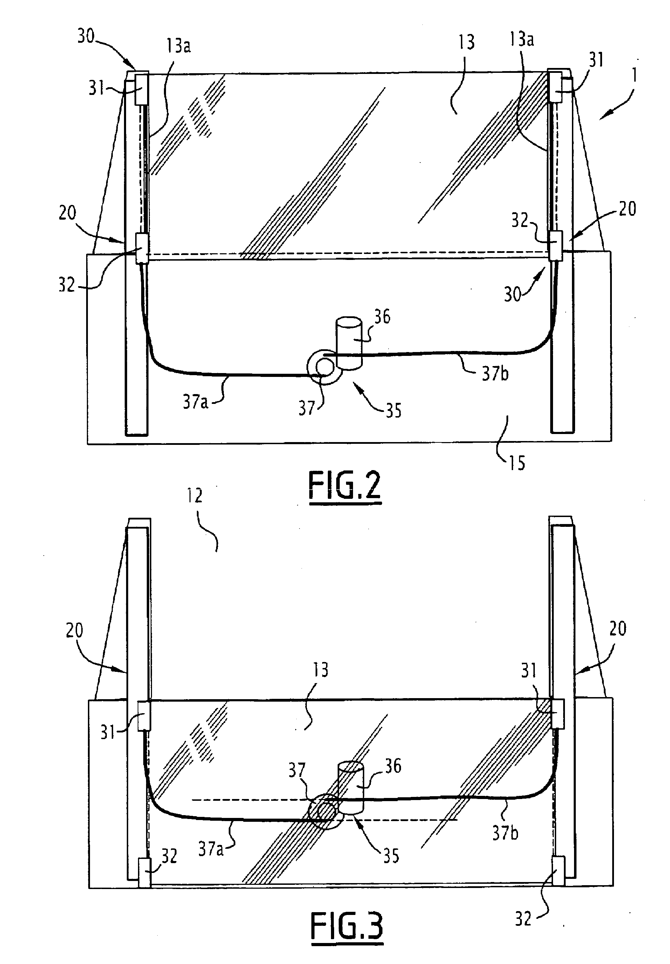

La structure de hayon 10 comporte une partie supérieure formée de deux montants latéraux 11 ménageant entre eux une ouverture 12 (Fig. 3) dans laquelle est montée une vitre arrière 13 (Figs. 1 à 3). Cette vitre arrière 13 est déplaçable par coulissement entre une position fermée d'obturation de l'ouverture 12 (Figs 1. et 2) et une position escamotée (Fig. 3).

La structure de hayon 10 comporte également une partie inférieure formée par un panneau 15 déterminant un logement de réception de la vitre arrière 13 dans sa position escamotée.

La partie inférieure de la structure de hayon forme aussi un logement de réception des moyens d'entraînement 35 de la vitre arrière 13 ainsi qu'un logement de réception d'un moyen d'entraînement d'un essuie-vitre arrière 50.

Le déplacement de la vitre arrière 13 entre la position fermée d'obturation de l'ouverture 12 et la position escamotée, est assuré par des moyens de guidage qui comprennent :
- deux rails parallèles et symétriques désignés chacun par la référence générale 20, chaque rail 20 étant disposé sur un bord latéral 13a de la vitre 13 et s'étendant sensiblement sur la hauteur du hayon 10, et
- un ensemble 30 d'organes de glissement monté sur chaque bord latéral 13a de cette vitre 13 et destiné à coopérer avec l'un desdits rails.

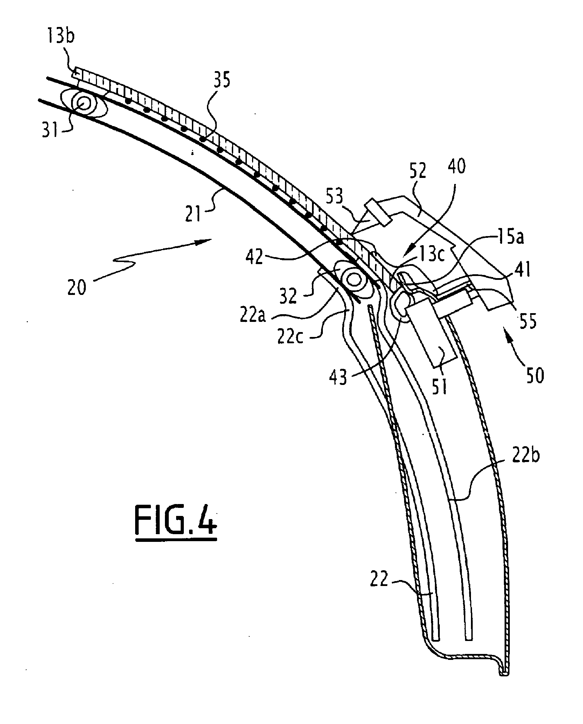

En se reportant maintenant à la Fig. 4, on va décrire un rail de guidage 20 disposé sur un bord latéral 13a de la vitre 13, l'autre rail 20 disposé sur l'autre bord latéral 13a de ladite vitre 13 étant identique, à la symétrie de montage près par rapport au plan médian vertical s'étendant longitudinalement au véhicule.

Ainsi que montré sur cette figure, le rail de guidage 20 s'étend sensiblement sur toute la hauteur du hayon 10 et comporte un rail supérieur 21 cintré et un rail inférieur 22 également cintré.

Le rail inférieur 22 comporte deux portions, une portion d'extrémité 22a et une portion principale 22b reliée à ladite portion d'extrémité par une portion courbe 22c. Comme montré à la Fig. 4, la portion d'extrémité 22a est décalée vers l'arrière du véhicule par rapport à la portion principale 22b.

L'ensemble 30 d'organes de glissement monté sur chaque bord latéral 13a de la vitre arrière 13 comprend, comme cela apparaît à la Fig. 4, un patin supérieur 31 disposé sensiblement au niveau du bord transversal 13b supérieur de la vitre arrière 13 et un patin inférieur 32 disposé sensiblement au niveau du bord transversal 13c inférieur de ladite vitre 13. Le patin supérieur 31 est destiné à coopérer avec le rail supérieur 21 et le patin inférieur 32 est destiné à coopérer avec le rail inférieur 22.

Ainsi que représenté, sur les Figs. 2 et 3, le déplacement de la vitre arrière 13 entre les deux positions est assuré par des moyens d'entraînement 35 de type connu et similaires par exemple à des moyens d'entraînement pour un lève-vitre d'une vitre latérale d'un véhicule automobile.

Ces moyens d'entraînement 35 comprennent, de manière classique, un moteur électrique 36 entraînant une poulie 37 à double sens d'enroulement et qui est reliée par un premier organe de traction 37a, comme par exemple un câble, à un ensemble 30 d'organes de glissement et par un second organe de traction 37b, comme par exemple un câble, à l'autre ensemble 30 d'organes de glissement. Ainsi, lors de l'entraînement en rotation de la poulie 37 par le moteur électrique 36, les organes de traction, respectivement 37a et 37b, s'enroulent sur cette poulie 37 ce qui entraîne le déplacement de la vitre arrière 13 de sa position fermée d'obturation de l'ouverture 12 vers sa position escamotée dans le panneau 15, ou inversement.

Selon un mode de réalisation préférentiel, le rail supérieur 21 de chaque rail 20 forme le montant latéral 11 de la structure de hayon 10, ledit montant latéral étant solidaire du panneau 15.

Ainsi que montré sur les Figs. 4 à 6, le bord transversal 15a supérieur du panneau 15 est équipé d'un organe d'étanchéité désigné par la référence générale 40 formé par un corps longitudinal 41 emboîté sur le bord transversal 15a. Le corps 41 de l'organe d'étanchéité 40 comporte une lèvre souple 42 destinée à s'appuyer sur le bord transversal 13c inférieur de la vitre arrière 13 et un bourrelet 43 disposé au-dessous de la lèvre 42 et destiné à s'appliquer contre le rebord inférieur 13d de cette vitre arrière 13 dans ladite position fermée.

Le panneau 15 supporte également un essuie-vitre arrière 50 qui comporte, de manière classique, un moteur 51 disposé à l'intérieur du panneau 15 et destiné à faire pivoter un bras 52 muni à son extrémité libre d'une raclette 53 en appui contre la face externe de la vitre arrière 13 lorsque cette vitre arrière 13 est dans sa position de fermeture de l'ouverture 12 du hayon 10, ainsi que montrée sur la Fig. 4.

Enfin, la face interne de la vitre arrière 13 comporte un réseau chauffant 55 relié par un faisceau électrique, non représenté, à des moyens d'alimentation électrique.

Dans la position de fermeture de la vitre arrière 13, représentée à la Fig. 4, le patin supérieur 31 est positionné à la partie supérieure du rail 21 tandis que le patin inférieur 32 est positionné dans la portion d'extrémité 22a du rail inférieur 22.

Dans cette position, du fait du décalage de la portion d'extrémité 22a du rail inférieur 22, la lèvre 42 de l'organe d'étanchéité 40 est appliquée contre le bord transversal 13c inférieur de la vitre arrière 13 et le bourrelet 43 est appliqué contre le rebord transversal 13d de cette vitre arrière 13.

Par ailleurs, la raclette 53 de l'essuie-vitre 50 est également appliquée contre la face externe de la vitre arrière 13.

Dans la position de fermeture, la vitre arrière 13 se trouve également disposée au prolongement des moyens d'entraînement de l'essuie-vitre arrière 50, comme cela est rendu visible à la figure 4.

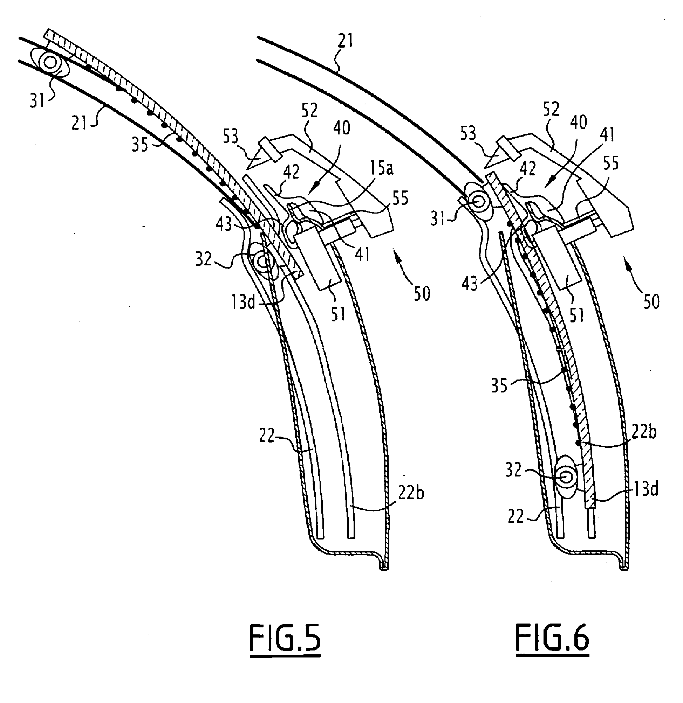

Dès que la vitre arrière 13 commence à descendre, sous l'action des moyens d'entraînement 35 dans le panneau 15, le patin supérieur 31 se déplace dans le rail supérieur 21 et le patin inférieur 32 se déplace dans la portion courbe 22c, puis dans la portion principale 22b cintrée du rail inférieur 22, ainsi que montré à la Fig. 5.

Le bord inférieur 13c de la vitre arrière 13 s'écarte de la lèvre 42 par un déplacement vers l'intérieur du véhicule, et le rebord inférieur 13d de ladite vitre arrière 13 s'écarte du bourrelet 43 de l'organe d'étanchéité 40. De même la face externe de la vitre arrière 13 s'écarte de la raclette 53 de l'éssuie-vitre 50. Par le déplacement vers l'intérieur du véhicule, le bord inférieur 13c de la vitre arrière 13 est alors dégagé des moyens d'entraînement de l'essuie-vitre qui ne font plus obstacle au déplacement de la vitre 13 vers la position escamotée.

Ensuite, le patin supérieur 31 coulisse dans le rail supérieur 21 et le patin inférieur 32 coulisse dans la portion principale 22b du rail inférieur 22 et la vitre arrière 13 descend progressivement dans le panneau 15 vers sa position escamotée, comme montrée à la Fig. 6.

Dans cette position escamotée, la lèvre 42 est en appui sur le bord transversal 13b supérieur de la vitre arrière 13 et le bourrelet 43 de l'organe d'étanchéité 40 est en appui sur la face externe de cette vitre arrière 13 ce qui assure, outre l'aspect esthétique, l'étanchéité par rapport à l'intérieur du panneau 15.

L'essuie-vitre 50 comporte une butée 55 qui évite que le bras 52 suive la vitre arrière 13 lors de son déplacement vers sa position escamotée.

Le mouvement d'écartement vers l'intérieur du véhicule de la vitre arrière 13 lors du début de sa descente vers sa position escamotée évite les problèmes d'usure de la raclette 53 de l'essuie-vitre 50 et les problèmes éventuels de rayures de la face externe de cette vitre arrière 13 car les frottements contre cette raclette 53 et contre l'organe d'étanchéité 40 sont évités.

C'est la raison pour laquelle les rails de guidage 20 comprennent une portion courbe 22c disposée sensiblement au droit de l'organe d'étanchéité, du moteur 35 d'entraînement de la vitre et du moteur d'entraînement 51 de l'essuie-vitre 50.

De manière avantageuse, une telle portion courbe 22c permet de disposer entre-eux les éléments constitutifs du hayon au plus près les uns des autres, ce qui de manière avantageuse assure une réduction de l'épaisseur du hayon.

Cette disposition permet également d'éviter les risques d'usure et de non fonctionnement du réseau chauffant de dégivrage de la vitre arrière 13.

De plus, les moyens de guidage du déplacement de la vitre arrière 13 constitués par deux rails 20 situés sur les côtés de cette vitre 13 et par des ensembles 30 de patins fixés sur les bords latéraux de ladite vitre 13 permettent de réduire la hauteur nécessaire dans le panneau 15 pour le positionnement de cette vitre arrière 13 dans sa position escamotée à l'intérieur dudit panneau 15.

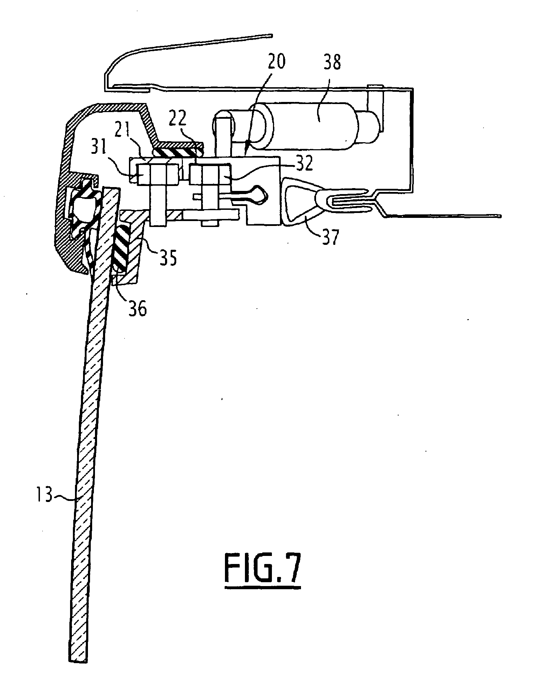

Ainsi que représenté à la Fig. 7, le rail supérieur 21 et le rail inférieur 22 de chaque rail de guidage 20 sont réalisés dans un profilé cintré réalisé par exemple en aluminium extrudé. Chaque patin 31 est porté par une cornière 35 dont une seule a été représentée à la Fig. 7 et chaque cornière 35 est fixée par exemple par un cordon de colle 36 sur la face interne de la vitre arrière 13. Dans la position de fermeture du hayon 10 représentée à la Fig. 7, chaque rail de guidage 20 est en appui sur un joint d'étanchéité 37 fixé sur le bord de l'entrée du coffre du véhicule automobile.

Un vérin d'équilibrage 38 est associé à chaque rail de guidage 20 de façon à assister le basculement du hayon 10 de sa position de fermeture vers sa position d'ouverture.

## Revendications

1. Structure de hayon de véhicule automobile, du type comportant, d'une part, une partie supérieure formée par deux montants latéraux (11), ménageant entre eux une ouverture (12) dans laquelle est montée une vitre arrière (13) déplaçable par coulissement par des moyens (20) de guidage entre une position fermée d'obturation de l'ouverture (12) et une position escamotée et, d'autre part, une partie inférieure formée par un panneau (15) déterminant un logement de réception de la vitre arrière (13) dans sa position escamotée,
lesdits moyens de guidage de la vitre arrière (13) comprenant :
- deux rails (20) parallèles disposés chacun sur un bord latéral (13a) de la vitre arrière (13) et s'étendant sensiblement sur la hauteur du hayon (10), et
- un ensemble (30) d'organes de glissement monté sur chaque bord latéral (13a) de la vitre arrière (13) et destiné à coopérer avec l'un desdits rails (20),
**caractérisée en ce que** chaque rail (20) comprend une portion courbe (22c) destinée à écarter, durant son déplacement, la vitre arrière (13) d'un organe d'étanchéité (40) porté par le panneau (15), la vitre arrière (13) étant, en position escamotée ou de fermeture, apte à venir en appui sur l'organe d'étanchéité (40).

2. Structure de hayon selon la revendication 1, **caractérisée en ce que** chaque ensemble (30) d'organes de glissement comprend deux patins (31, 32), un patin supérieur (31) disposé sensiblement au niveau du bord transversal (13a) supérieur de la vitre arrière (13) et un patin inférieur (32) disposé sensiblement au niveau d'un bord transversal (13c) inférieur de ladite vitre arrière (13).

3. Structure de hayon selon la revendication 1 ou 2, **caractérisée en ce que** chaque rail (20) comprend un rail supérieur (21) cintré, destiné à coopérer avec le patin supérieur (31) de la vitre arrière (13), le rail inférieur (22) étant destiné à coopérer avec le patin inférieur (32) de ladite vitre arrière (13).

4. Structure de hayon selon la revendication 3, **caractérisée en ce que** le rail supérieur (21) forme le montant latéral (11) correspondant, ledit rail (21) étant solidaire du panneau (15).

5. Structure de hayon selon la revendication 3, **caractérisée en ce que** le rail inférieur (22) comporte deux portions (22a, 22b), une portion d'extrémité (22a) et une portion principale (22b) cintrée et reliée à la portion d'extrémité (22a) par une portion courbe (22c), la portion d'extrémité (22a) étant décalée vers l'arrière du véhicule par rapport à la portion principale (22b) pour plaquer le bord transversal (13c) inférieur de la face externe de la vitre arrière (13) contre un organe d'étanchéité (40) porté par le bord transversal (15a) supérieur du panneau (15).

6. Structure de hayon selon la revendication 5, **caractérisée en ce que** l'organe d'étanchéité (40) comprend une lèvre souple (42) destinée à s'appuyer sur le bord transversal (13c) inférieur de la vitre arrière (13) dans sa position fermée et un bourrelet (43) disposé au-dessous de la lèvre (42) et destiné à s'appliquer contre le rebord inférieur (13d) de cette vitre arrière (13) dans ladite position.

7. Véhicule automobile, **caractérisé en ce qu'**il comporte une structure de hayon (10) selon l'une quelconque des revendications précédentes.

## Claims

1. Tailgate structure of an automobile vehicle, of the type comprising, on the one hand, an upper part formed by two lateral uprights (11), providing between them an opening (12) in which a rear window (13) is mounted which is displaceable by sliding by guiding means between a closed position, closing off the opening (12), and a retracted position and, on the other hand, a lower part formed by a panel (15) determining a housing for receiving the rear window (13) in its retracted position,
the said guiding means of the rear window (13) comprising:
- two parallel rails (20) each arranged on a lateral edge (13a) of the rear window (13) and extending substantially over the height of the tailgate (10), and
- an assembly (30) of sliding members mounted on each lateral edge (13a) of the rear window (13) and intended to cooperate with one of the said rails (20),
**characterized in that** each rail (20) comprises a curved portion (22c) intended to move, during its displacement, the rear window (13) away from a sealing member (40) carried by the panel (15), the rear window (13) being, in the retracted or closed position, suited to come to rest on the sealing member (40).

2. Tailgate structure according to Claim 1, **characterized in that** each assembly (30) of sliding members comprises two pads (31, 32), an upper pad (31) arranged substantially at the level of the upper transverse edge (13a) of the rear window (13) and a lower pad (32) arranged substantially at the level of a lower transverse edge (13c) of the said rear window (13).

3. Tailgate structure according to Claim 1 or 2, **characterized in that** each rail (20) comprises a bent upper rail (21), intended to cooperate with the upper pad (31) of the rear window (13), the lower rail (22) being intended to cooperate with the lower pad (32) of the said rear window (13).

4. Tailgate structure according to Claim 3, **characterized in that** the upper rail (21) forms the corresponding lateral upright (11), the said rail (21) being integral with the panel (15).

5. Tailgate structure according to Claim 3, **characterized in that** the lower rail (22) comprises two portions (22a, 22b), an end portion (22a) and a main portion (22b), bent and connected to the end portion (22a) by a curved portion (22c), the end portion (22a) being offset towards the rear of the vehicle with respect to the main portion (22b) to flatten the lower transverse edge (13c) of the external face of the rear window (13) against a sealing member (40) carried by the upper transverse edge (15a) of the panel (15).

6. Tailgate structure according to Claim 5, **characterized in that** the sealing member (40) comprises a flexible lip (42) intended to rest on the lower transverse edge (13c) of the rear window (13) in its closed position and a bead (43) arranged beneath the lip (42) and intended to apply itself against the lower edge (13d) of this rear window (13) in the said position.

7. Automobile vehicle, **characterized in that** it comprises a tailgate structure (10) according to any one of the preceding claims.

## Patentansprüche

1. Hecktürstruktur eines Kraftfahrzeugs, des Typs, der einerseits einen oberen Teil aufweist, der aus zwei seitlichen Ständern (11) ausgebildet ist, die zwischen einander eine Öffnung (12) einrichten, in der eine Heckscheibe (13) montiert ist, die durch Schieben durch Führungsmittel (20) zwischen einer geschlossenen Verschlussposition der Öffnung (12) und einer eingefahrenen Position verschiebbar ist, und, andererseits, einen unteren Teil, der aus einer Tafel (15) besteht, die eine Aufnahme der Heckscheibe (13) in ihrer eingefahrenen Position festlegt,
wobei die Führungsmittel der Heckscheibe (13) Folgendes aufweisen:
- zwei parallele Schienen (20), die jeweils auf einem Seitenrand (13a) der Heckscheibe (13) angeordnet sind und sich im Wesentlichen auf der Höhe der Hecktür (10) erstrecken, und
- eine Einheit (30) von Gleitorganen, die auf jeden Seitenrand (13a) der Heckscheibe (13) montiert und dazu bestimmt ist, mit einer der Schienen (20) zusammenzuwirken,
**dadurch gekennzeichnet, dass** jede Schiene (20) einen gekrümmten Abschnitt (22c) aufweist, der dazu bestimmt ist, während seiner Verschiebung die Heckscheibe (13) von einem Abdichtungsorgan (40), das von der Tafel (15) getragen wird, abzuspreizen, wobei die Heckscheibe (13) in eingefahrener oder Verschlussposition auf dem Abdichtungsorgan (40) zum Aufliegen kommen kann.

2. Hecktürstruktur nach Anspruch 1, **dadurch gekennzeichnet, dass** jede Einheit (30) von Gleitorganen zwei Kufen (31, 32) aufweist, eine obere Kufe (31), die im Wesentlichen auf dem Niveau des oberen Querrands (13a) der Heckscheibe (13) angeordnet ist, und eine untere Kufe (32), die im Wesentlichen auf dem Niveau eines unteren Querrands (13c) der Heckscheibe (13) angeordnet ist.

3. Hecktürstruktur nach Anspruch 1 oder 2, **dadurch gekennzeichnet, dass** jede Schiene (20) eine obere gebogene Schiene (21), die dazu bestimmt ist, mit der oberen Kufe (31) der Heckscheibe (13) zusammenzuwirken, aufweist, wobei die untere Schiene (22) dazu bestimmt ist, mit der unteren Kufe (32) der Heckscheibe (13) zusammenzuwirken.

4. Hecktürstruktur nach Anspruch 3, **dadurch gekennzeichnet, dass** die obere Schiene (21) den entsprechenden seitlichen Ständer (11) bildet, wobei die Schiene (21) fest mit der Tafel (15) verbunden ist.

5. Hecktürstruktur nach Anspruch 3, **dadurch gekennzeichnet, dass** die untere Schiene (22) zwei Abschnitte (22a, 20b) aufweist, nämlich einen Endabschnitt (22a) und einen gebogenen Hauptabschnitt (23b), der mit dem Endabschnitt (22a) durch einen gebogenen Abschnitt (22c) verbunden ist, wobei der Endabschnitt (22a) zur Rückseite des Fahrzeugs in Bezug zu dem Hauptabschnitt (22b) versetzt ist, um den unteren Querrand (13c) der Außenseite der Heckscheibe (13) gegen ein Abdichtungsorgan (40), das von dem oberen Querrand (15a) der Tafel (15) getragen wird, anzudrücken.

6. Hecktürstruktur nach Anspruch 5, **dadurch gekennzeichnet, dass** das Abdichtungsorgan (40) eine biegsame Lippe (42) aufweist, die dazu bestimmt ist, sich auf den unteren Querrand (13c) der Heckscheibe (13) in ihrer geschlossenen Position zu drücken, und einen Wulst (43), der unterhalb der Lippe (42) angeordnet und dazu bestimmt ist, sich gegen den unteren Rand (13d) dieser Heckscheibe (13) in dieser Position zu drücken.

7. Kraftfahrzeug, **dadurch gekennzeichnet, dass** es eine Hecktürstruktur (10) nach einem der vorhergehenden Ansprüche aufweist.
